# EUROPÄISCHE PATENTANMELDUNG

(11) **EP 0 522 331 A2**
(43) Veröffentlichungstag der Anmeldung: **13.01.1993**
(21) Anmeldenummer: 92110313.1
(22) Anmeldetag: 18.06.1992
(51) Int. Cl.: C22B 1/248

(54) **Entsorgen der Begleitstoffe von Altfahrzeugen oder Altgeräten**

(30) Priorität: 12.07.1991 DE 4123028
(71) Anmelder: MERCEDES-BENZ AG, D-70327 Stuttgart (DE)
(72) Erfinder: Razim, Claus, Prof. Dr. Ing., W-7000 Stuttgart 50 (DE)

(57) **Zusammenfassung**

Die Erfindung befaßt sich mit der Problematik des umweltschonenden Entsorgens der organischen und anorganisch-nichtmetallischen Begleitstoffe von Altfahrzeugen oder anderen Massenartikeln wie Waschmaschinen oder Kühlschränken. Erfindungsgemäß wird ein neuer und umweltverträglicher bzw. -schonender und auch aufnahmefähiger Weg zur Entsorgung dieser Abfallstoffe gewiesen, indem diese als chemisch reduzierende und Scklacke bildende Zuschlagstoffe bei der Verhüttung von Eisenerz in einer Hochofenanlage oder zur Erzeugung von Stahl oder Gußeisen in einer Kupolofenanlage verwendet werden, wobei die üblicherweise als Zuschlagstoffe werwendeten Stoffe zumindest Teilweise ersetzt werden.

## Beschreibung

Die Erfindung befaßt sich mit der Problematik des umweltschonenden Entsorgens der organischen und anorganisch-nichtmetallischen Begleitstoffe von Altfahrzeugen oder anderen Massenartikeln wie Waschmaschinen oder Kühlschränken. Sie betrifft insbesondere ein Verfahren gemäß dem Oberbegriff des Patentanspruchs 1.

Beim Entsorgen der Altfahrzeuge werden diese von Autoverwertern zunächst partiell demontiert, wobei die Altfahrzeuge beispielsweise jeweils
- von den Betriebsstoffen wie Öl, Brems- oder Kühlflüssigkeit,
- von Motor und Getriebe,
- von - sonstigen - Aluminium- und Leichtmetallteilen,
- ggf. vom Abgas-Katalysator
- vom elektrischen Akkumulator,
- vom Kabelbaum,
- von den installierten Elektromotoren und der Lichtmaschine,
- von den Reifen,
- von größeren, gezielt ausgesuchten, leicht demontierbaren, einheitlich aus einem bestimmten thermoplastischen Kunststoff bestehenden Kunststoffteilen, deren Werkstoff -sortenrein sortiert - wiederverwendbar ist,
befreit und diese Stoffe oder Teile gesondert entsorgt, aufbereitet oder recycliert, wobei jedoch nicht bei allen Autoverwertern sämtliche aufgezählten Komponenten demontiert werden. Die solcherart mehr oder weniger umfassend partiell demontierten Altfahrzeuge müssen nach bisher allgemein verbreiteter Auffassung von den noch an ihnen verbliebenen organischen Fahrzeugbegleitstoffen getrennt werden, bevor der Stahlschrott durch Erschmelzen zurückgewonnen werden kann. Auch bei der Entsorgung von anderen Massenartikeln wie Waschmaschinen, Spülmaschinen, Wäschetrocknern oder Kühlschränken - sog. "weiße Ware" der Elektrobranche - geht man im Prinzip ähnlich vor. Für das Trennen von Stahlschrott und Nicht-Stahlschrott mußte das partiell demontierte Altfahrzeug bzw. sonstige Altgerät mittels Schrottschere in Kleinteile zertrennt - geshreddert - werden; die Kleinteile können dann in schwere, insbesondere metallene Teile und in leichte Kunststoffteile sortiert werden, wobei aus der schweren Fraktion zunächst durch Magnetabscheider die Stahlteile und aus dem Rest die Nichteisenmetalle, insbesondere die Leichtmetalle manuell aussortiert werden; der dann noch übrig-bleibende Rest enthält hauptsächlich die nichtmetallischen anorganischen Stoffe wie Glas, Porzellan, Keramik oder dergleichen. Dabei fällt, bedingt durch die sehr große Anzahl von jährlich zu verschrottenden Altfahrzeugen oder Altgeräten, eine entsprechend große Menge organischer und anorganischer-nichtmetallischer Begleitstoffe an, die zu entsorgen mehr und mehr Probleme bereitet. Bei der Entsorgung jüngerer Altfahrzeuge macht diese Anteil bereits etwa 20 bis 25 Gewichtsprozent des Gesamtgewichtes der Altfahrzeuge aus. Bei partiell demontierten Altfahrzeugen fallen recht unterschiedliche Eisen- und Stahlteile an, beispielweise
- Tiefziehblechteile unterschiedlicher Wandstärken, z.T. verzinkt
- Schmiedeteile, z.T. gehärtet,
- Grauguß- und Stahlgußteile,
- Teile aus legiertem und gehärtetem Stahl, z.B. Federn oder
- korrosionsfeste, legierte Stähle.

Die erwähnten organischen Begleitstoffe sind im wesentlichen
- thermoplastische und duroplastische Kunststoffe jedweder Zusammensetzung, Verwendung oder Verarbeitungsform z.B. als Folie, als Formteil oder als Schaumstoff,
- Elastomere, insbesondere Gummiteile, z.B. Altreifen oder Schlauchstücke,
- Textilien aus Kunst- und/oder Naturfasern,
- Lack- oder Farbüberzüge,
- öl- oder Kraftstoffreste,
- Holzteile, Papier- oder Pappeteile, Teile aus Zellulosefasern,
- Teile aus Mischungen dieser Stoffe oder Verbundteile daraus.

Die anorganisch-nichtmetallischen Begleitstoffe sind vor allem
- Glas,
- Porzelan, Keramik (Isolatoren),
- Emailüberzüge,
- anhaftender Sand oder Erde, mitgeschleppte Steine.

Ein Entsorgen dieses sog. Shreddermülls in Mülldeponien ist auf längere Sicht nicht mehr möglich, weil der verfügbare Deponieraum in absehbarer Zeit immer weniger wird. Ein Verbrennen oder thermisches Entsorgen derartiger Abfälle ist wegen der geforderten Luftreinhaltung und der dafür notwendigen Investitionen und Betriebskosten vergleichsweise teuer, insbesondere dann, wenn in jeder Hinsicht wirklich emissionsfrei gearbeitet werden soll, wobei auch künftig noch verschärfte Umweltschutzauflagen des Gesetzgebers zu berücksichtigen sind.

Neuere Versuche, die organischen und anorganisch-nichtmetallischen Begleitstoffe in einem Schmelzreaktor für das Erschmelzen des Fahrzeugschrotts als Energielieferant zum - teilweisen - Ersatz des Energieträgers für die Schmelzenergie zu nutzen, überzeugen nicht, weil die dabei entstehende Schlacke einen sehr hohen Anteil an Eisenoxid enthält, was zum einen einen Verlust an Ausbeute bei der Stahlerzeugung aus dem Schrott und zum anderen ein Nutzungs- oder Entsorgungsproblem für die Schlacke darstellt, weil die stark eisenoxidhaltige Schlacke das Grundwasser verunreinigt.

Aufgabe der Erfindung ist es, einen geigneten anderen, aufnahmefähigen Weg zum umweltschonenden Entsorgen der organischen und anorganisch-nichtmetallischen Begleitstoffe von Altfahrzeugen und/oder von in großen Stückzahlen von den Verbrauchern abgestoßenen Altgeräten aufzuzeigen.

Die Lösung dieser Aufgabe erfolgt - ausgehend von dem gattungsgemäß zugrundegelegten Verfahren - erfindungsgemäß mit den kennzeichnenden Merkmalen des Patentanspruchs 1. Danach wird empfohlen, die organischen und anorganisch-nichtmetallischen Begleitstoffe als chemisch reduzierende und Schlacke bildende Zuschlagstoffe bei der Verhüttung von Eisenerz im Hochofen und/oder bei der Erschmelzung von Stahlschrott im Kupolofen zu verwenden. Überraschenderweise ergibt die Analyse der bei der üblichen Verschrottung von Altfahrzeugen - bisher gesondert - anfallenden organischen und anorganisch-nichtmetallischen Fahrzeugbegleitstoffe eine Zusammensetzung, die den Hochofenprozess oder den Kupolofenprozess nicht nur nicht stört, sondern ihn sogar unterstützt, weil
- die organischen Materialien ohne weiteres als kohlenstoffhaltige Reduktionsmittel zur Desoxidation des Erzes oder des verrosteten bzw. korrodierten Stahlschrottes nutzbar sind,
- die Elastomere, soweit sie nicht als Kohlenstofflieferanten in Frage kommen, einen Beitrag zur Lieferung der benötigten Schmelzenergie leisten und
- die anorganischen, nicht-metallischen Anteile zur erforderlichen Schlackenbildung beitragen.

Zur Begünstigung der erforderlichen Schlackenbildung im Schachtofen-Prozess werden auch die anorganisch-nichtmetallischen Teile der Altfahrzeuge bzw. Altgeräte, insbesondere Glas herangezogen bzw. genutzt und auf diese Weise umweltschonend entsorgt und in weiterverarbeitbare und u.U. als Wertstoff anzusehende Hochofenschlacke umgewandelt. Zu diesem Zweck werden also die Glas- und Keramikteile der Altfahrzeuge bzw. -geräte von deren partieller Demontage ausgenommen, d.h. in den zu erschmelzenden Altfahrzeugen bzw. -geräten belassen.

Durch eine Anwendung der Erfindung kann eine ganze Reihe von Vorteilen erzielt werden, nämlich:
- eine umweltschonende Entsorgung der organischen Fahrzeugbegleitstoffe,
- Reduzierung der zu deponierenden Müllmenge und somit Entlastung der Mülldeponien,
- Reduzierung der zu verbrennenden Müllmenge und somit Entlastung der Müllverbrennungsanlagen,
- Schonung der Recourcen an herkömmlichen chemisch reduzierenden und/oder Schmelzenergie liefernden Zuschlagstoffen bei der Stahlerschmelzung, wie Koks, öl oder Gas,
- Schonung der Umwelt aufgrund einer insgesamt geringeren Erzeugung von Kohlendioxid,
- Ausnutzung der bei einer Schachtofenanlage für die Erzverhüttung oder für die Stahl- oder Gußeisengewinnung aus Schrott ohnehin installierten Abluftreinigungsanlage auch für das Reinigen der bei der chemischen Umsetzung der organischen und anorganisch-nichtmetallischen Begleitstoffe mit dem Stahlschrott anfallenden Abgase,
- Entfall des aufwendigen Shredderns der partiell demontierten Altfahrzeuge bzw Altgeräte; diese können rationeller und kostengünstiger paketiert werden,
- Entfall des ebenfalls kostenverursachenden Sortierens bzw. Trennens von Stahlschrott und sonstigen Begleitstoffen,
- Eröffnung umweltschonender, aufnahmefähiger Entsorgungskanäle für bei bisher bereits bestehenden Verschrottungsanlagen insbesondere für Fahrzeug anfallenden Shreddermüll aus organischen und anorganisch-nichtmetallischen Begleitstoffen oder für sonstige, anderweitig gesammelte oder anfallende Kunststoff- oder Elastomerabfälle, insbesonder Altreifen.

Es ist ohne weiteres möglich, die bei Autoverwertern bereits bestehenden Shredderanlagen auch weiterhin zu betreiben, allerdings braucht nunmehr dank der Erfindung der geshredderte Schrott nicht mehr nach Stahl und nicht-metallische Stoffe sortiert zu werden, sondern es kann das Gemisch aus beiden den Stahlerzeugern oder Gießereien, die einen Hochofen oder einen Kupolofen betreiben, angeliefert werden. Nachdem jedoch Schrottpressen hinsichtlich Investions- und Betriebskosten günstiger liegen als Shredderanlagen, ist es zweckmäßiger, die partiell demontierten Altfahrzeuge oder Altgeräte gemeinsam mit den jeweils in ihnen enthaltenen organischen und anorganisch-nichtmetallischen Begleitstoffen in einer Schrottpresse zu paketieren und diese Schrottpakete in den Verhüttungs- oder Stahlerschmelzungs- oder Gußeisengewinnungprozess zu geben.

Je nach wirtschafts-geografischem Standort einer Hochofenanlage und der standortbedingten Art und Qualität der dort vorhandenen und dementsprechend zu verarbeitenden Rohstoffen kann die qualitative und quantitative Zusammensetzung der in den Hochofen einzugebenden Stoffe - im deutschen Sprachraum der sog. Möller - von Standort zu Standort recht unterschiedlich ausfallen. In jedem Fall wird jedoch ein bestimmter Hochofen zeitlich etwa gleichbleibend mit einem gleichartig zusammengesetzten Möller beschickt. Damit ein Ofenbetreiber, der von Altfahrzeugen stammenden Schrott mit verarbeitet, beim Erschmelzen des von völlig unterschiedlichen Altfahrzeugen stammenden Fahrzeugschrotts mit annähernd gleichbleibenden Bedingungen hinsichtlich der Zusammensetzung der Schachtofenbeschickung rechnen kann, wird vorteilhafterweise jedes der paketierten Altfahrzeuge bzw. Altgeräte auf ein definiertes, für alle typ-unterschiedlichen Altfahrzeuge bzw. -geräte gleichgroßes Mengenverhältnis von Stahlschrott und organischen und anorganisch-nichtmetallischen Begleitstoffen eingestellt, indem in jedes der Altfahrzeuge bzw. -geräte nach deren partiellem Demontieren aber noch vor deren Paketieren jeweils ein typ-individuell abgewogenes Gemenge an Kunststoff- oder Elastomerabfällen und Altglas oder - falls der Nicht-Eisen-Anteil an dem Paket zu gering sein sollte - an vorzugsweise geshreddertem Stahlschrott eingegeben wird.

Bei einem von der Anmelderin durchgeführten Versuch waren die teildemontierten Altfahrzeuge - es handelte sich um Altfahrzeuge vom Typ "190" der Marke der Anmelderin - folgendermaßen zusammengesetzt:

| | |
|---|---|
| Gesamtgewicht des Teildemontierten Altfahrzeuges | ca. 730 kg |
| davon Stahl und Eisen | ca. 540 kg |
| einschl. Spuren von Kupfer (0,25 %) und Zinn (0,01 %) organische Bestandteile | ca. 140 kg |
| anorganisch-nichtmetallische Bestandteile | ca. 30 kg |
| Aluminium | ca. 20 kg |

Das beim Beispiel in den Schrottpaketen enthaltene Aluminium - etwa 3,8 % des eingebrachten Stahlschrotts - wird nicht in den erzeugten Stahl mit einlegiert, sondern verbrennt im Schachtofen, wobei es als Energieträger genutzt wird; das Aluminiumoxid bildet ebenfalls Schlacke. Die in Spuren im erzeugten Eisen vorhandenen Buntmetalle sind nicht störend für die Eisenqualität; es könnten sich u.U. sogar günstige Auswirkungen hinsichtlich Korrosionsverhalten des Eisens ergeben. Beim Verschrotten der Altfahrzeuge durch Shreddern werden die Kleinteile sortiert nach Wertstoffen wie Stahl, Aluminium, schweren Buntmetallen und in den bisher nicht zu verwertenden nichtmetallischen Rest, den sog. Shreddermüll, der die Organischen Bestandteile, also die Kunststoffe und Gummiteile sowie die anorganisch-nichtmetallischen Bestandteile wie Glas, Sand, Steine und Keramik enthält. Meist liegt der Anteil der anorganisch-nichtmetallischen Bestandteile bei etwa 30 Gem.-% des Shreddermülls, also relativ hoch, was im wesentlichen auf eine im Ausmaß nur geringe Demontage der Seitenscheiben der Altfahrzeuge zurückzuführen sein dürfte, die zur Herstellung von Glasflaschen wiederverwendet werden können. Bei dem oben genannten Zahlenbeispiel liegt der Anteil der anorganisch-nichtmetallischen Bestandteile prozentual niedriger als 30 %, nämlich bei etwa 18 %, weil bei den im Beispiel genannten Altfahrzeugen die Seitenscheiben zuvor demontiert worden waren.

## Patentansprüche

1. Verfahren zum Entsorgen von Altfahrzeugen oder schrotthaltigen Altgeräten nach deren entgültiger Stillegung, bei dem diese zunächst gezielt von gesondert recyclierbaren oder aufbereitbaren Wertstoffen oder von Gefahrstoffen und/oder von die Stahlwiedergewinnung störenden oder die Stahlqualität beeinträchtigenden Stoffen befreit werden,
- bei dem anschließend die solcherart partiell demontierten, aber den größten Anteil der ursprünglich in die Fahrzeuge bzw. Geräte eingebauten oder an sie angebrachten Teile bzw. Stoffe aus organischen und anorganisch-nichtmetallischen Werkstoffen - im Folgenden kurz "Begleitstoffe" genannt - noch enthaltenden Altfahrzeuge bzw. Altgeräte für eine Wiedergewinnung des in ihnen enthaltenen Stahlschrottes vorbereitet werden und
- bei dem schließlich die Begleitstoffe entsorgt werden und der Stahlschrott in einem Hochofen oder in einem Kupolofen - im Folgenden kurz "Schachtofen" genannt - unter Zugabe von chemisch reduzierenden und Schlacke bildenden Zuschlagstoffen eingeschmolzen wird,
**dadurch gekennzeichnet,**
daß die Begleitstoffe durch deren gemeinsames Eingeben mit dem Stahlschrott der Altfahrzeuge bzw. Altgeräte in den Schachtofen darin mit den im Stahlschrott bzw. Eisenerz enthaltenen Eisenoxiden chemisch umgesetzt werden, wobei die eingegebenen Begleitstoffe als chemisch reduzierende und Schlacke bildende Zuschlagstoffe dienen und herkömmliche Zuschlagstoffe für diesen Zweck wie Koks, öl oder Gas zumindest teilweise ersetzen.

2. Verfahren nach Anspruch 1,
**dadurch gekennzeichnet,**
daß die partiell demontierten Altfahrzeuge bzw. Altgeräte gemeinsam mit den jeweils in ihnen enthaltenen Begleitstoffen in einer Schrottpresse paketiert und diese Schrottpakete in den Schachtofen eingegeben werden.

3. Verfahren nach Anspruch 2,
**dadurch gekennzeichnet,**
daß jedes der paketierten Altfahrzeuge bzw. Altgeräte auf ein definiertes, für alle typ-unterschiedlichen Altfahrzeuge gleichgroßes Mengenverhältnis von Stahlschrott und Begleitstoffe eingestellt wird, indem in jedes der Altfahrzeuge bzw. Altgeräte nach deren partiellem Demontieren aber noch vor deren Paketieren jeweils ein typ-individuell abgewogenes Gemenge an Begleitstoffen anderer Herkunft oder eine typ-individuell abgewogene Menge von Kunststoffabfällen oder - im Falle eines zu geringen Anteiles von Schrott - von vorzugsweise geshreddertem Stahlschrott eingegeben wird.
